Europäisches Patentamt

European Patent Office

Office européen des brevets

(11) Publication number: **0 408 332 A2**

# EUROPEAN PATENT APPLICATION

(21) Application number: 90307570.3

(22) Date of filing: **11.07.90**

(51) Int. Cl.⁵: **A23L 1/23**, A23L 1/20,
A23L 1/03, A23L 1/182,
C12C 5/02

(30) Priority: **11.07.89 JP 178720/89**

(43) Date of publication of application:
**16.01.91 Bulletin 91/03**

(84) Designated Contracting States:
**AT BE CH DE DK ES FR GB GR IT LI LU NL SE**

(71) Applicant: **Miyamoto, Chikuhei**
**1241 Takagasaka**
**Machida-shi, Tokyo-to 194(JP)**

(72) Inventor: **Miyamoto, Chikuhei**
**1241 Takagasaka**
**Machida-shi, Tokyo-to 194(JP)**

(74) Representative: **Holmes, Michael John**
**Frank B. Dehn & Co. Imperial House 15-19**
**Kingswayway**
**London WC2B 6UZ(GB)**

(54) **Natural fermentation agent.**

(57) A pulverized natural fermentation agent is disclosed which can be used not only in fermentation of food and drink materials in producing foods and drinks but also just before taking foods and drinks to improve their taste. Such a fermentation agent or fermentation additive comprises at least one pulverized natural substance selected from pulverized soy bean, pulverized sea tangle or "kombu" and pulverized sesame together with a pulverized germinator. These ingredients are mixed in a good nutritive ratio. The product is in the form of fluidized powder, and can be easily applied to foods and drinks. It can be produced simply by drying soy bean, sea tangle or "kombu", sesame and other natural matters, pulverizing these natural ingredients and mixing the pulverized ingredients. Therefore, no expensive equipment is required, and accordingly the product can be marketed at a low cost. No side effect to health is caused, and it provides a nutritive function. Also, the fermentation of food and drink materials may be substantially accelerated by using such fermentation agent.

## NATURAL FERMENTATION AGENT

The present invention relates to a natural fermentation agent or fermentation additive.

As is well known, fermentation treatment is widely used in producing foods and drinks. Specifically, microorganisms are added to food or drink materials during production, so that the process of fermentation modifies selected organic materials. As a result the natural characteristics of foods and drinks are altered to desired modified characteristics, and desired products result. Some examples are alcoholic fermentation, lactic acid fermentation, vinegar production, citric acid production, and bread-making fermentation. The microorganisms used in these fermentations are beer yeast, alcohol yeast, Japanese "sake" yeast, bread yeast, wine yeast, lactic-acid bacilli etc.

The fermentation treatment is used not only in the course of food or drink production but also both in the course of food or drink preparation and just prior to taking such foods or drinks, for the purpose of providing a pleasing taste or increasing an acid taste or mildness to meet one's taste. There is in particular a demand for using selected fermentations to improve the taste of foods or drinks just before taking them. As a matter of course such fermentation agents should be natural products causing no adverse effect to health, and desirably, of nutritive value. Also, they are preferably handled with ease.

From this point of view, yeasts and bacteria which have been cultivated industrially and widely used in industrial processes are not satisfactory. Particularly, such yeasts and bacteria are not appropriate for adding to foods and drinks just prior to taking them, and are found to have little or no nutritive value and not to be beneficial to health.

In view of the above, one object of the present invention is to provide a pulverized fermentation agent which can be used not only in the course of fermentation in producing foods and drinks but also just prior to taking foods and drinks or preparing foods and drinks to improve their taste.

To attain this objective, a natural fermentation agent or fermentation additive according to the present invention comprises at least one pulverized sea tangle or "kombu" and pulverized sesame together with pulverized germinator.

Said pulverized natural substances may be selected from a group consisting of at least soy bean, sea tangle or "kombu" and sesame, and these substances may have pulverized dried shrimp, sardine or any other animal protein added thereto. Also, they may have a pulverized plant protein or fat added. Any kind of soy bean or sea tangle appropriate for the purpose may be used, and white or black sesame may be used. Yeast may advantageously be added.

The pulverized germinator, may preferably be a mixture of ginseng and an enzyme, such as amylase. It may comprise another appropriate enzyme. In addition to ginseng, pulverized buds may be used.

Preferably, the weight ratio of each selected pulverized natural substance to the major pulverized natural substance ranges from 0.5 to 3 by weight.

The disclosures of Japanese Patent Application No. 178720/1989 are incorporated herein by reference.

Any appropriate pulverizing method may be used to produce a natural fermentation agent according to the present invention. According to one aspect of the present invention such a natural fermentation agent may have a well-balanced content of animal and/or plant protein, and a very small amount of vitamins, mineral etc. mixed together. Also, it may contain amylase etc. for the purpose of keeping an added yeast component active for an elongated period. In an attempt to attain even mixing and to satisfy the requirements for stability, mixing may begin with relatively small particles of sesame, and may end with relatively large particles of soy bean. The particle sizes of such ingredients range from 5,000 to 10,000 mesh. A germinator containing amylase may be carefully added to a mixture of selected ingredients, and the final product may be in the form of fluidized powder.

Such a natural fermentation was put in a sealed enclosure and was kept in the dark for two or three months. Then it was found that the yeast remained active, and that minerals and other additives of very small amount were not changed at all.

As described earlier, such a pulverized natural fermentation agent or fermentation accelerator can be used not only in the course of fermentation of food or drink materials in producing foods and drinks but also just before taking foods and drinks to improve the taste of such foods and drinks, adding particularly mildness, body or acid taste. For example, the fermentation of beer, cider and other alcoholic beverages may be caused by using a pulverized natural fermentation according to the present invention. Also, boiled rice, boiled or steamed foods, soups and any other food and drinks may be improved in taste by adding such a pulverized natural fermentation. For example, watermelons may be subjected to fermentation for an alcoholic beverage by using a pulverized natural fermentation agent according to the present invention which may contain animal and plant protein, vitamins, minerals etc. in good nutritive ratio. Also, it was found these nutritive ingredients remained unchanged even after long-term preservation. Particularly, yeast was found to remain active after long-term preservation of foods and drinks. Also, the fermentation of food and drink materials can be remarkably accelerated by using a pulverized natural fermentation agent according to the present invention.

These effects will be seen from the following non-limiting examples:

Example 1

Pulverized soy bean (20 grams), pulverized sea tangle or "kombu" (10 grams) and pulverized sesame (20 grams) were mixed together, and then pulverized ginseng (12 grams) and amylase, yeast and trace nutrient additives (31 grams) were added to the mixture. These pulverized ingredients were 7,000 to 8,000 mesh powders. They were mixed one after another in small-to-large particle order, beginning with sesame powder.

Tha analysis of such pulverized natural fermentation agent revealed that: water content (atmospheric drying) was 4.84%; liquid content 15.87%; protein content 35.65%; and carbohydrate content (fiber 5.24%; sugar 28.38%; ash 10.02%).

The pulverized natural fermentation accelerator of 0.2 grams was added to washed rice of 370 grams and water of 500 grams in an automatic rice cooker. The cooked rice was puffy and rich in gluten, compared with the one cooked without such fementation accelerator.

Example 2

The same pulverized fermentation accelerator (0.01 grams) as used in Example 1 was added to a bowl of soy soup. The soup was sweet and mild, compared with the one without the fermentation accelerator.

Example 3

Pulverized soy bean (15 grams), pulverized sea tangle or "kombu" (8 grams), pulverized dried sardine (18 grams), and pulverized dried shrimp (12 grams) were mixed together, and then pulverized ginseng (12 grams) and amylase and trace nutrient additives (31 grams) were added to the mixture. These pulverized ingredients were 6,000 to 8,000 mesh powders. They were mixed one after another in small-to-large particle order, as in Example 1.

The analysis of such pulverized natural fermentation agent revealed that: water content (atmospheric drying) was 4.84%; liquid content 18.20%; protein content 35.83%; carbohydrate content (fiber 5.72%; sugar 27.53%; ash 7.89%).

The pulverized natural fermentation accelerator of 0.05 grams was added to beer of 180 cc. The beer was found to be mild, losing it's bitter taste.

As described above. a pulverized natural fermentation agent according to the present invention can be used not only in fermentation of food and drink materials in producing foods and drinks but also just before taking foods and drinks to improve their tastes. Such a fermentation agent or fermentation additive comprises a mixture of pulverized natural substances selected from pulverized soy bean, pulverized sea tangle or "kombu" and pulverized sesame along with pulverized germinator. These ingredients are mixed in a good nutritive ratio. The product is in the form of fluidized powder, and can be easily applied to foods and drinks. It can be produced simply by drying soy bean, sea tangle or "kombu", sesame and other natural matters, pulverizing these natural ingredients and mixing pulverized ingredients. Therefore, no expensive equipment is required, and accordingly the product can be marketed at a low cost. No side effect to health is caused, and it provides a nutritive function. Also, the fermentation of food and drink materials may be substantially accelerated by using a fermentation agent according to the present invention.

Claims

1. Natural fermentation agent or fermentation additive which comprises at least one pulverized natural substance selected from pulverized soy bean, pulverized sea tangle or "kombu" and pulverized sesame together with a pulverized germinator.

2. Natural fermentation agent or fermentation additive according to claim 1 wherein said pulverized germinator comprises pulverized ginseng and an enzyme.

3. A natural fermentation agent according to claim 2 wherein said enzyme is amylase.

4. A natural fermentation agent according to any of claims 1 to 3 additionally comprising pulverized plant or animal protein.

5. A natural fermentation agent according to claim 4 wherein said pulverized protein comprises dried shrimp and/or sardine.

6. The use of a fermentation agent according to any of claims 1 to 5 to expedite the fermentation of food and drink.

7. The use of a fermentation agent according to any of claims 1 to 5 to elongate the period for which yeast remains active.

8. The use of a fermentation agent according to any of claims 1 to 5 to expedite the fermentation of food and drink materials at an increased rate.

9. A food or drink, which has been modified by the use of a fermentation agent as described in any of claims 1 to 5.